(19) **Europäisches Patentamt**
**European Patent Office**
**Office européen des brevets**

(11) **EP 1 515 017 B1**

(12) **EUROPEAN PATENT SPECIFICATION**

(45) Date of publication and mention
of the grant of the patent:
**22.02.2012 Bulletin 2012/08**

(51) Int Cl.:
*F01N 3/20* (2006.01)  *F01N 3/035* (2006.01)
*F01N 3/025* (2006.01)  *F01N 9/00* (2006.01)
*F02D 41/02* (2006.01)  *F01N 3/08* (2006.01)
*F01N 3/023* (2006.01)

(21) Application number: **04021627.7**

(22) Date of filing: **10.09.2004**

(54) **Catalyst control apparatus of internal combustion engine**

Katalysatorsteuergerät einer Brennkraftmaschine

Dispositif de contrôle d'un catalyseur pour un moteur à combustion interne

(84) Designated Contracting States:
**DE ES FR GB IT**

(30) Priority: **12.09.2003 JP 2003321876**

(43) Date of publication of application:
**16.03.2005 Bulletin 2005/11**

(73) Proprietors:
• **Toyota Jidosha Kabushiki Kaisha**
**Toyota-shi, Aichi-ken, 471-8571 (JP)**
• **KABUSHIKI KAISHA TOYOTA JIDOSHOKKI**
**Kariya-shi,**
**Aichi-ken (JP)**

(72) Inventors:
• **Otsubo, Yasuhiko**
**Toyota-shi,**
**Aichi-ken 471-8571 (JP)**

• **Kato, Hidenaga**
**Kariya-shi,**
**Aichi-ken (JP)**
• **Yamada, Masaru**
**Kariya-shi,**
**Aichi-ken (JP)**

(74) Representative: **Kuhnen & Wacker**
**Patent- und Rechtsanwaltsbüro**
**Prinz-Ludwig-Strasse 40A**
**85354 Freising (DE)**

(56) References cited:
**WO-A-03/033892    DE-A1- 10 249 880**
**JP-A- 2002 122 019    US-A- 5 746 049**
**US-A- 5 857 163    US-A1- 2002 000 087**
**US-A1- 2004 050 036**

## Description

The present invention relates to a catalyst control apparatus of an internal combustion engine that adds fuel to exhaust gas from a fuel adding valve provided in an exhaust system of the internal combustion engine, thereby oxidizing the fuel in an exhaust purifying catalyst located in a downstream section so that the catalyst bed temperature is increased.

An exhaust purifying apparatus that has an exhaust purifying catalyst such as NOx occlusion-reduction catalyst in an exhaust system of an internal combustion engine for purifying NOx in exhaust gas is known in the art.

Such an exhaust purifying catalyst is poisoned with sulfur component contained in fuel, which degrades the NOx occlusion capacity and the reduction capacity. To restore the capacity of the catalyst from the sulfur poisoned state, sulfur needs to be emitted from the catalyst by increasing the catalyst bed temperature and making the air-fuel ratio to a level that is slightly below the stoichiometric air-fuel ratio.

Also, an apparatus that has a filter type exhaust purifying catalyst for trapping particulate matter in exhaust gas is known in the art. In such an apparatus, after a certain amount of particulate matter is deposited, the particulate matter needs to be oxidized and removed by increasing the catalyst bed temperature at an air-fuel ratio that is higher than the stoichiometric air-fuel ratio.

To increase a catalyst bed temperature, control needs to be executed in which fuel is added to exhaust gas to oxidize fuel at an exhaust purifying catalyst portion, thereby producing heat to increase the catalyst bed temperature.

When increasing a catalyst bed temperature in this manner, the catalyst bed temperature must be accurately controlled. Otherwise, the catalyst bed temperature may be too low. In such a case, sulfur may not emitted and particulate matter may not be oxidized. On the contrary, if the catalyst bed temperature is too high, the catalyst may be degraded.

Conventionally, a technique for accurately controlling a catalyst bed temperature during a process for eliminating sulfur poisoning has been proposed in which an exhaust temperature is detected by a temperature sensor provided in a section upstream of an exhaust purifying catalyst, the catalyst bed temperature of the exhaust purifying catalyst located downstream is accurately estimated based on the detected exhaust temperature, and added fuel is adjusted, accordingly. For example, refer to Japanese Laid-Open Patent Publication No. 2002-122019.

However, in the above described prior art, although the temperature of exhaust gas discharged by an internal combustion engine, that is, the temperature of exhaust gas flowing into an exhaust purifying catalyst is referred to, the thermal capacity of the exhaust system is not considered. Therefore, when the temperature of exhaust gas discharged from an internal combustion is changed during a transition of the operating condition of the internal combustion engine, particularly, when the exhaust temperature is lowered, the fuel addition amount is increased to maintain the catalyst bed temperature at a target catalyst bed temperature.

However, since the exhaust system including the exhaust purifying catalyst has a thermal capacity, a decrease of the temperature of exhaust gas discharged from the internal combustion engine does not necessarily lower the catalyst bed temperature immediately. Thus, when the exhaust temperature is lowered, an increased amount of fuel may be supplied to the exhaust purifying catalyst the temperature of which is still high. This excessively increases the catalyst bed temperature beyond the target catalyst bed temperature. As a result, the catalyst will be degraded.

JP 2002 122 019 A discloses a catalyst heating control apparatus also based on the thermal capacity of the catalyst.

It is an objective of the present invention to control addition of fuel such that an exhaust purifying catalyst is not excessively heated even if the operating condition of an internal combustion engine is in transition according to claim 1.

Means for achieving the above objectives and advantages of the present invention will be now discussed.

A catalyst control apparatus of an internal combustion engine according to the present invention is an apparatus that estimates a steady-state catalyst bed temperature of an exhaust purifying catalyst based on an operating condition of the internal combustion on the assumption that addition of fuel is not being performed. Based on comparison between the steady-state catalyst bed temperature and a target bed temperature, the apparatus causes a fuel adding valve located in a section upstream of the exhaust purifying catalyst to add fuel to exhaust, thereby oxidizing the fuel at the exhaust purifying catalyst to increase the catalyst bed temperature to the target bed temperature. The apparatus is characterized by estimating means and limiting means. On the assumption that addition of fuel from the fuel adding valve is not being performed, the estimating means estimates a dynamic catalyst bed temperature of the exhaust purifying catalyst based on a history of the operating condition of the internal combustion engine and a thermal capacity of an exhaust system. The limiting means limits addition of fuel when the steady-state catalyst bed temperature is lower than the dynamic catalyst bed temperature estimated by the estimating means, and the difference between the steady-state catalyst bed temperature and the dynamic catalyst bed temperature is greater than a reference temperature difference.

Even if the operating condition of the internal combustion engine is in transition, the estimating means obtains the dynamic catalyst bed temperature, which corresponds to an actual catalyst bed temperature in a state where no addition of fuel from the fuel adding valve is being performed. When the steady-state catalyst bed temperature, which determines the amount of addition of fuel from the fuel adding valve, is lower than the dynamic catalyst bed temperature by an amount greater than a reference temperature difference, using the steady-state catalyst bed temperature causes addition of fuel to be excessive. This results in an excessive oxidation at the exhaust purifying catalyst. Accordingly, the catalyst bed temperature can be excessively heated. Therefore, in this case, the limiting means limits addition of fuel, so that the exhaust purifying catalyst is not excessively heated even if the operating condition of the internal combustion engine is in transition.

A catalyst control apparatus of an internal combustion engine not part of the present invention is an apparatus that estimates a steady-state catalyst bed temperature of an exhaust purifying catalyst based on an operating condition of the internal combustion on the assumption that addition of fuel is not being performed. Based on comparison between the steady-state catalyst bed temperature and a target bed temperature, the apparatus causes a fuel adding valve located in a section upstream of the exhaust purifying catalyst to add fuel to exhaust, thereby oxidizing the fuel at the exhaust purifying catalyst, which is located in a downstream section, to increase the catalyst bed temperature to the target bed temperature. The apparatus is characterized by detecting means and limiting means. The detecting means detects one or more of parameters including an engine speed of the internal combustion engine, a load on the internal combustion engine, an acceleration opening degree, and a speed of a vehicle on which the internal combustion engine is mounted. The limiting means limits addition of fuel when one or more of the parameters detected by the detecting means decrease by a degree that is greater than a reference decreasing degree.

When one or more of the parameters detected by the detecting means decrease by a degree that is greater than a reference decreasing degree, the operating condition of the internal combustion engine is judged to in transition where the steady-state catalyst bed temperature decreases.

Therefore, if the steady-state catalyst bed temperature is used; an excessive amount of fuel will be added, which excessively promotes oxidation at the exhaust purifying catalyst, which can excessively increase the catalyst bed temperature. Therefore, in this case, the limiting means limits addition of fuel, so that the exhaust purifying catalyst is not excessively heated even if the operating condition of the internal combustion engine is in transition.

After an operating condition of the internal combustion engine that causes an exhaust temperature to be high has continued for a reference continuation period, the limiting means preferably limits addition of fuel when one or more of the parameters detected by the detecting means, which parameters include the engine speed of the internal combustion engine, the load on the internal combustion engine, the acceleration opening degree, and the speed of the vehicle on which the internal combustion engine is mounted, decrease by a degree that is greater than the reference decreasing degree.

In this manner, by assuming that the operating condition of the internal combustion engine that causes the exhaust temperature to be high has continued for the reference continuation period, the control apparatus is capable of limiting addition of fuel only when the operating condition of the internal combustion engine is in transition where the exhaust purifying catalyst is excessively heated, which improves the accuracy of the fuel addition limitation.

According to the invention, the catalyst control apparatus of an internal combustion engine preferably includes measuring means for measuring the exhaust temperature. The limiting means preferably removes the limit to addition of fuel when the exhaust temperature measured by the measuring means decreases to a limit removing reference temperature.

When the exhaust temperature measured by the measuring means decreases to the limit removing reference temperature, the actual catalyst bed temperature of the exhaust purifying catalyst is judged to be sufficiently lowered. Therefore, removing the limit to addition of fuel does not cause the exhaust purifying catalyst to be excessively heated. Thus, the temperature increase process can be continued to adequately performing the catalyst control.

The limiting means preferably removes the limit to addition of fuel when the dynamic catalyst bed temperature of the exhaust purifying catalyst, which temperature is estimated based on a history of the operating condition of the internal combustion engine and the thermal capacity of the exhaust system on the assumption that addition of fuel from the fuel adding valve is not being performed, decreases to the limit removing reference temperature.

When the dynamic catalyst temperature decreases to the limit removing reference temperature, the actual catalyst bed temperature of the exhaust purifying catalyst is judged to be sufficiently lowered. Therefore, removing the limit to addition of fuel does not cause the exhaust purifying catalyst to be excessively heated. Thus, the temperature increase process can be continued to adequately performing the catalyst control.

The limiting means preferably removes the limit to addition of fuel when the limit to addition of fuel has continued for a predetermined reference limiting period.

When the limit to addition of fuel has continued for the reference limiting period, the actual catalyst bed temperature of the exhaust purifying catalyst is judged to be sufficiently lowered. Therefore, removing the limit to addition of fuel does not excessively heat the exhaust purifying catalyst.

The limiting means preferably limits addition of fuel by prohibiting addition of fuel from the fuel adding valve.

The limitation to addition of fuel may be performed by prohibiting addition of fuel from the fuel adding valve. In this case, the fuel adding valve completely stops supplying fuel to the exhaust purifying catalyst. Thus, the exhaust purifying catalyst is not excessively heated when the operating condition is in transition.

The limiting means preferably limits addition of fuel by decreasing the amount of addition of fuel from the fuel adding valve.

The limitation to addition of fuel may be performed by decreasing the amount of addition of fuel from the fuel adding valve. Accordingly, the amount of heat produced by oxidation of the exhaust purifying catalyst is decreased. Thus, the exhaust purifying catalyst is not excessively heated when the operating condition is in transition.

The exhaust purifying catalyst is preferably a NOx occlusion-reduction catalyst, and the temperature increase to the target bed temperature is preferably a process performed when sulfur is emitted from the NOx occlusion-reduction catalyst poisoned with sulfur.

In a case where the exhaust purifying catalyst is a NOx occlusion-reduction catalyst, the temperature increase to the target bed temperature may be a process that is performed when sulfur is emitted from the NOx occlusion-reduction catalyst poisoned with sulfur. In the temperature increase process where sulfur is emitted, the exhaust purifying catalyst is not excessively heated when the operating condition is in transition.

The exhaust purifying catalyst preferably includes a filter for filtering particulate matter in exhaust and a layer of a NOx occlusion-reduction catalyst formed on the filter, and the temperature increase to the target bed temperature is preferably a process performed when the particulate matter is removed from the filter through oxidization.

In the temperature increase process where particulate matter is oxidized, the exhaust purifying catalyst is not excessively heated when the operating condition is in transition.

The internal combustion engine is preferably a diesel engine. Applying the present invention to a diesel engine prevents the exhaust purifying catalyst from being excessively heated when the operating condition of the diesel engine is in transition.

Fig. 1 is a block diagram showing a vehicle diesel engine and a control system as a first embodiment;

Fig. 2 is a flowchart showing a determination process for limiting addition of fuel executed by an ECU of the first embodiment;

Fig. 3 is a flowchart like that in Fig. 3, showing a temperature increase process;

Fig. 4 is a timing chart showing an example of a process according to the first embodiment;

Fig. 5 is a timing chart showing an example compared with the first embodiment;

Fig. 6 is a flowchart showing a determination process for limiting addition of fuel, not part of the invention;

Fig. 7 is a timing chart showing an example of a process not part of the invention; and

Fig. 8 is a flowchart showing another example of the temperature increase process.

[First embodiment]

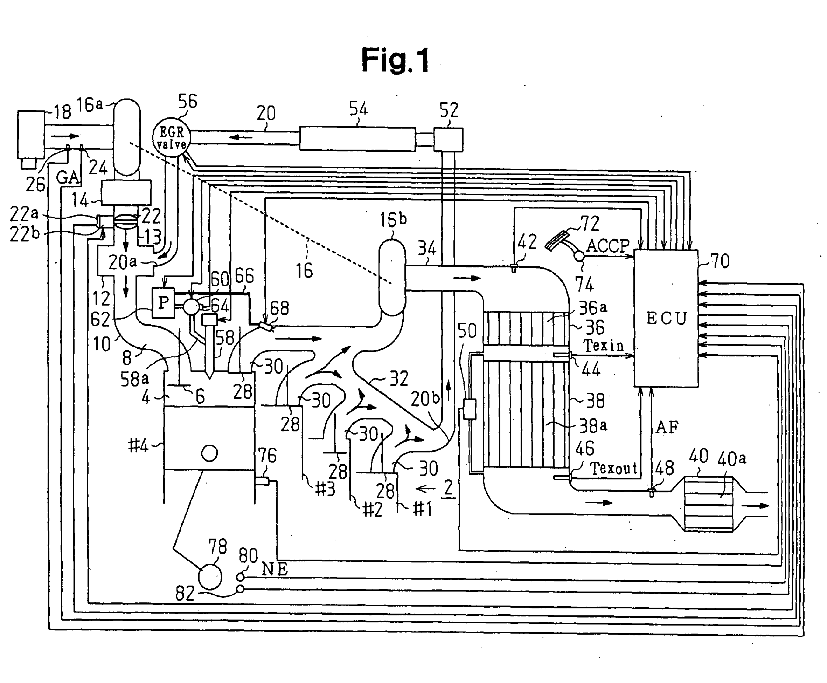

Fig. 1 is a block diagram showing a control system including a vehicle diesel engine and a catalyst control apparatus, to which the above described invention is applied. The present invention may be applied to other types of engine such as a lean combustion gasoline engine if the engine has a similar catalyst system to the system described herein.

The diesel engine 2 has cylinders. In this embodiment, the number of the cylinders is four, and the cylinders are denoted as #1, #2, #3, and #4. A combustion chamber 4 of each of the cylinders #1 to #4 includes an intake port 8, which is opened and closed by an intake valve 6. The combustion chambers 4 are connected to a surge tank 12 via the intake ports 8 and an intake manifold 10. The surge tank 12 is connected to an intercooler 14 and an outlet of a supercharger with an intake passage 13. In this embodiment, the supercharger is a compressor 16a of an exhaust gas turbocharger 16. An inlet of the compressor 16a is connected to an air cleaner 18. An exhaust gas recirculation (hereinafter, referred to as EGR) passage 20 is connected to the surge tank 12. Specifically, an EGR gas supply port 20a of the EGR passage 20 opens to the surge tank 12. A throttle valve 22 is located in a section of the intake passage 13 between the surge tank 12 and the intercooler 14. An intake flow rate sensor 24 and an intake temperature sensor 26 are located in a section between the compressor 16a and the air cleaner 18.

The combustion chamber 4 of each of the cylinders #1 to #4 includes an exhaust gas port 30, which is opened and closed by an exhaust gas valve 28. The combustion chambers 4 are connected to an inlet of an exhaust gas turbine 16b via the exhaust gas ports 30 and an exhaust manifold 32. An outlet of the exhaust gas turbine 16b is connected to an exhaust passage 34. The exhaust gas turbine 16b draws exhaust gas from a section of the exhaust manifold 32 that corresponds to the side of the fourth cylinder #4.

Three catalyst converters 36, 38, 40 each containing an exhaust purifying catalyst are located in the exhaust passage 34. The first catalyst converter 36 located at the most upstream section contains a NOx occlusion-reduction catalyst 36a. When exhaust gas is regarded as an oxidizing atmosphere (lean) during a normal operation of the diesel engine 2, the NOx occlusion-reduction catalyst 36a occludes NOx. When the exhaust gas is regarded as a reducing atmosphere (stoichiometric or lower air-fuel ratio), NOx that has been occluded by the NOx occlusion-reduction catalyst 36a is reduced with hydrocarbon (HC) and carbon monoxide (CO). NOx is purified in this manner.

A second catalyst converter 38 containing a filter 38a is located at the second position from the most upstream side. The exhaust filter 38a has a monolithic wall. The wall has pores through which exhaust gas passes. The areas about the pores of the exhaust filter 38a are coated with a layer of a NOx occlusion-reduction catalyst. Therefore, NOx is purified as described above. Further, the filter wall traps particulate matter (hereinafter referred to as PM) in exhaust gas. Thus, active oxygen, which is generated in a high-temperature oxidizing atmosphere when NOx is occluded, starts oxidizing PM. Further, ambient excessive oxygen oxidizes the entire PM. Accordingly, PM is purified at the same time as NOx is purified. In this embodiment, the first catalyst converter 36 and the second catalyst converter 38 are formed integrally.

A third catalyst converter 40 is located in the most downstream section. The third catalyst converter 40 contains an oxidation catalyst 40a, which oxidizes and purifies HC and CO.

A first air-fuel ratio sensor 42 is located upstream of the NOx occlusion-reduction catalyst 36a. A first exhaust temperature sensor 44 is located between the NOx occlusion-reduction catalyst 36a and the exhaust filter 38a. A second exhaust temperature sensor 46 and a second air-fuel ratio sensor 48 are located between the filter 38a and the oxidation catalyst 40a. The second exhaust temperature sensor 46 is closer to the filter 38a than the oxidation catalyst 40a. The second air-fuel ratio sensor 48 is located closer to the oxidation catalyst 40a than the filter 38.

The first air-fuel ratio sensor 42 and the second air-fuel ratio sensor 48 each detect the air-fuel ratio of exhaust gas at the respective positions based on components of the exhaust gas. The first and second air-fuel ratio sensors 42, 48 each output electric signal in proportion to the detected air-fuel ratio. The air-fuel ratio of exhaust gas refers to the ratio of an oxidizing component and a reductant in exhaust gas. The first exhaust temperature sensor 44 detects an exhaust temperature Texin at the corresponding position. Likewise, the second exhaust temperature sensor 46 detects an exhaust temperature Texout at the corresponding position.

Pipes of a differential pressure sensor 50 are connected to a section upstream of the filter 38 and a section downstream of the filter 38. The differential pressure sensor 50 detects the pressure difference between the sections upstream and downstream of the filter 38a, thereby detecting clogging in the filter 38.

An EGR gas intake port 20b of the EGR passage 20 is provided in the exhaust manifold 32. The EGR gas intake port 20b is open at a section that corresponds to the side of the first cylinder #1, which is opposite to the side of the fourth cylinder #4, at which the exhaust gas turbine 16b introduces exhaust gas.

An iron based EGR catalyst 52 and an EGR cooler 54 are located in the EGR passage 20 in this order from the EGR gas intake 20b. The iron based EGR catalyst 52 reforms EGR gas from the EGR gas intake port 20b of the EGR passage 20. The EGR cooler 54 cools EGR gas. The EGR catalyst 52 also functions to prevent clogging of the EGR cooler 54. An EGR valve 56 is located between the EGR cooler 54 and the EGR gas supply port 20a. The opening degree of the EGR valve 56 is changed to adjust the amount of EGR gas supplied from the EGR gas supply port 20a to the intake system.

Each of the cylinders #1 to #4 is provided with a fuel injection valve 58 that directly injects fuel into the corresponding combustion chamber 4. The fuel injection valves 58 are connected to a common rail 60 with fuel supply pipes 58a. A variable displacement fuel pump 62, which is electrically controlled, supplies fuel to the common rail 60. High pressure fuel supplied from the fuel pump 62 to the common rail 60 is distributed to the fuel injection valves 58 through the fuel supply pipes 58a. A fuel pressure sensor 64 for detecting the pressure of fuel is attached to the common rail 60.

Further, the fuel pump 62 also supplies low pressure fuel to an fuel adding valve 68 through a fuel supply pipe 66. The fuel adding valve 68 is provided in the exhaust gas port 30 of the fourth cylinder #4 and injects fuel to the exhaust gas turbine 16b. In this manner, fuel adding valve 68 adds fuel to exhaust gas. A catalyst control mode, which is described below, is executed by such addition of fuel.

An electronic control unit (hereinafter referred to as ECU) 70 is mainly composed of a digital computer having a CPU, a ROM, and a RAM, and drive circuits for driving other devices. The ECU 70 reads signals from the intake flow rate sensor 24, the intake temperature sensor 26, the first air-fuel ratio sensor 42, the first exhaust temperature sensor 44, the second exhaust temperature sensor 46, the second air-fuel ratio sensor 48, the differential pressure sensor 50, the EGR opening sensor in the EGR valve 56, the fuel pressure sensor 64, and the throttle opening sensor 22a. Further, the ECU 70 reads signals from an acceleration pedal sensor 74 that detects the depression degree of an acceleration pedal 72 (acceleration opening degree ACCP), and a coolant temperature sensor 76 that detects the temperature of coolant of the diesel engine 2. Also, the ECU 70 reads signals from an engine speed sensor 80 that detects the engine speed NE (the number of revolutions of a crankshaft 78), and a cylinder distinguishing sensor 82 that distinguishes cylinders by detecting the rotation phase of the crankshaft 78 or the rotation phase of the intake cams.

Based on the operating condition of the engine 2 obtained from these signals, the ECU 70 controls the amount and the timing of fuel injection by the fuel injection valve 58. Further, the ECU 70 controls the opening degree of the EGR valve 56, the throttle opening degree with the motor 22b, and the displacement of the fuel pump 62. Also, the ECU 70 executes PM regeneration control mode and sulfur poisoning (hereinafter referred to as S poisoning) elimination control. For example, in an EGR control, a throttle opening degree and an EGR opening degree (the opening degree of the EGR valve 56) are adjusted in coordination such that the EGR ratio seeks a target EGR ratio, which is set based on the engine load and an engine speed NE of the engine 2. Further, an intake flow rate feedback control is performed in which the EGR opening degree is adjusted such that the intake flow rate seeks a target intake flow rate (target value per rotation of the engine 1), which is set based on the engine load and the engine speed NE. The engine load is represented by the fuel injection amount in this example. However, the engine load may be represented by the acceleration opening degree ACCP.

The ECU 70 selects one of a normal combustion mode and a low temperature combustion mode according the operating condition. The low temperature combustion mode refers to a combustion mode in which a large amount of EGR gas is introduced to slow down the increase of the combustion temperature, thereby simultaneously reducing NOx and smoke. In this embodiment, the low temperature mode is executed in a low load, middle-to-high rotation speed region. The other combustion mode is the normal combustion mode, in which a normal EGR control (including a case where no EGR is executed) is performed.

The ECU 70 performs four catalyst control modes, which are modes for controlling the catalyst. The catalyst control modes include a PM regeneration control mode, an S poisoning elimination control mode, a NOx reduction control mode, and a normal control mode. In the PM regeneration control mode, PM deposited on the filter 38a in the second catalyst converter 38 is heated and burned. PM is then changed to $CO_2$ and $H_2O$ and discharged. In this mode, addition of fuel from the fuel adding valve 68 is repeated in an air-fuel ratio higher than the stoichiometric air-fuel ratio so that the catalyst bed temperature is increased ((for example, to a temperature in a range from 600°C to 700°C). In some cases, an after injection by the fuel injection valve 58 is performed.

In the S poisoning elimination control mode, if the NOx occlusion-reduction catalyst 36a and filter 38a are poisoned and the NOx occlusion capacity is lowered, sulfur component (S component) is emitted so that the catalyst 36a and the filter 38a are restored from the S poisoning. In this mode, addition of fuel from the fuel adding valve 68 is repeated so that the catalyst bed temperature is increased (for example, to a temperature in a range from 600°C to 700°C). Further, an air-fuel ratio lowering process is executed in which the air-fuel ratio is changed to the stoichiometric air-fuel ratio or a value slightly lower than the stoichiometric air-fuel ratio. As in the other modes, an after injection is performed by the fuel injection valve 58 in this mode in some cases.

In the NOx reduction control mode, NOx occluded by the NOx occlusion-reduction catalyst 36a and the filter 38a is reduced to $N_2$, $CO_2$, and $H_2O$ and emitted. In this mode, addition of fuel from the fuel adding valve 68 is intermittently performed at a relatively long interval so that the catalyst bed temperature becomes relatively low (for example, to a temperature in a range from 250°C to 500°C). Accordingly, the air-fuel ratio is lowered to or below the stoichiometric air-fuel ratio.

The normal control is a control mode other than the above three control modes. In the normal control, addition of fuel from the fuel adding valve 68 and the after injection by the fuel injection valve 58 are not performed.

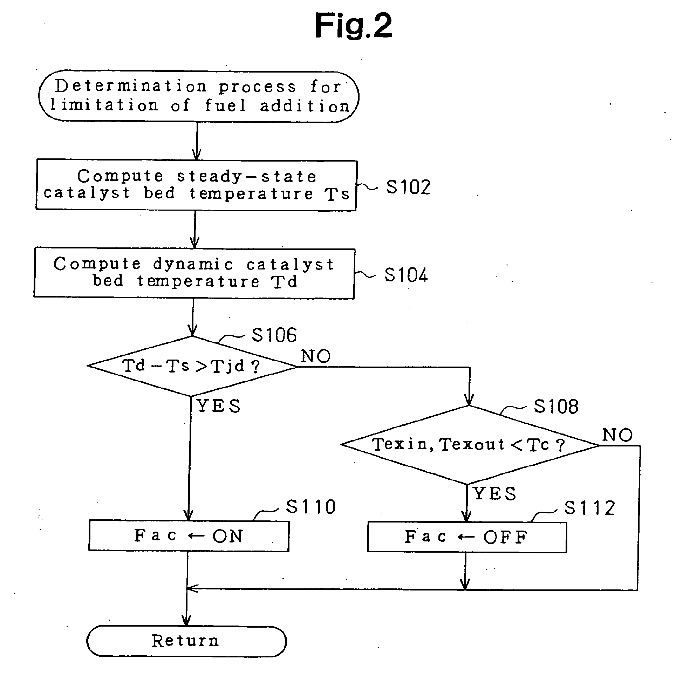

Next, a determination process for limiting addition of fuel executed by the ECU 70 will be described. This process is shown in the flowchart of Fig. 2. This process is executed in an interrupting manner every predetermined interval. Steps in the flowchart, each of which corresponds to a process, is denoted as S.

When this process is started, a steady-state catalyst bed temperature Ts is computed based on a load (in this case, the amount of fuel injected to be combusted by the fuel injection valve 58) and the engine speed NE by referring to a catalyst bed temperature map (S102). The catalyst bed temperature map is obtained through experiments using the load and the engine speed NE as parameters and defines the relationship between the catalyst bed temperature and the exhaust temperature. A temperature that is sought by the catalyst bed temperature of the filter 38a (the same is true for the NOx occlusion-reduction catalyst 36a) when the same load and the engine speed NE stably continue and there is no addition of fuel by the fuel adding valve 68 is set as the steady-state catalyst bed temperature Ts.

Then, a dynamic catalyst bed temperature Td is computed by an equation 1 (S104).

$$(\text{Equation 1})$$
$$Td \leftarrow Tdold + ft(Tdold, \ Ts, \ GA, \ Hcex)$$

The value Tdol is the dynamic catalyst bed temperature Td obtained in the previous control cycle. A map ft (Tdold, Ts, GA, Hcex) is used for computing a degree of temperature increase (if the value is a minus, a degree of temperature decrease) in one control cycle based on the previous value Tdold, the steady-state catalyst bed temperature (corresponds to an instantaneous value of the exhaust temperature) Ts, the intake air amount GA, and the thermal capacity Hcex of the exhaust system. Since the thermal capacity Hcex has a fixed value, the map may be ft(Tdold, Ts, GA).

The reason for this is that, when exhaust gas the temperature of which corresponds to the steady-state catalyst bed temperature Ts at an exhaust gas flow rate corresponding to the intake flow rate GA is received by an exhaust system the thermal capacity of which is Hcex and the temperature state is the previous value Tdold, the degree of a temperature increase is uniquely defined based on the values Tdold, Ts, GA, Hcex. That is, suppose that there is no addition of fuel form the fuel adding valve 68, the dynamic catalyst bed temperature Td of the filter 38a is estimated based on the history of the operating condition of the engine 2 (states of the values Tdold, Ts, GA) and the thermal capacity Hcex of the exhaust system. Assuming that the thermal capacity Hcex is a fixed value, the map ft is obtained through experiments using the temperature of the exhaust system (corresponds to the previous value Tdold), the steady-state catalyst bed temperature Ts, and the intake air flow rate GA as control parameters. Instead of using the map ft, the degree of temperature increase may be computed using formulas based on the values Tdold, Ts, GA, Hcex.

Then, whether the difference (Td - Ts) between the dynamic catalyst bed temperature Td and the steady-state catalyst bed temperature Ts is greater than a limit starting reference temperature difference Tjd is judged (S106). The limit starting reference temperature difference Tjd is set to a value less than the difference between a target catalyst bed temperature and the lowest catalyst bed temperature that degrades a catalyst. For example, if the target catalyst bed temperature is 650°C and the lowest catalyst bed temperature that degrades a catalyst is 750°C, the limit starting reference temperature difference Tjd is set to value in a range between 50°C and 80°C.

If an inequality (Td - Ts $\leq$ Tjd) is satisfied (negative outcome at S106), whether the exhaust temperature Texin detected by the first exhaust temperature sensor 44 and the exhaust temperature Texout detected by the second exhaust temperature sensor 46 are both lower than a limit removing reference temperature Tc is judged (S108). This judgment exists for removing the limit to addition of fuel, which will be discussed below. If the exhaust temperatures Texin, Texout are both lower than the limit removing reference temperature Tc (positive outcome at S108), a fuel addition limiting flag Fac is set to OFF (S112). If one of or both of the exhaust temperatures Texin, Texout are equal to or higher than the limit removing reference temperature Tc (negative outcome at S180), the current routine is temporarily suspended.

If the operating condition of the diesel engine 2 is in a transmission, and an inequality (Td -Ts > Tjd) is satisfied (positive outcome at S1069), the fuel addition limiting flag Fac is set to ON (S110). In the subsequent control cycle, the state where the flag Fac is ON is continued as long as the inequality (Td - Ts > Tjd) is satisfied (positive outcome at S106).

Thereafter, even if the inequality (Td - Ts $\leq$ Tjd) is satisfied (negative outcome at S106), the equation Fac = ON holds as long as any or both of the exhaust temperatures Texin, Texout are equal to or higher than the limit removing reference temperature Tc (negative outcome at S108). Thereafter, if the exhaust temperatures Texin, Texout both fall below the limit removing reference temperature Tc (positive outcome at S108), the flag Fac is set back to OFF (S112). In this manner, the state is returned to the initial state.

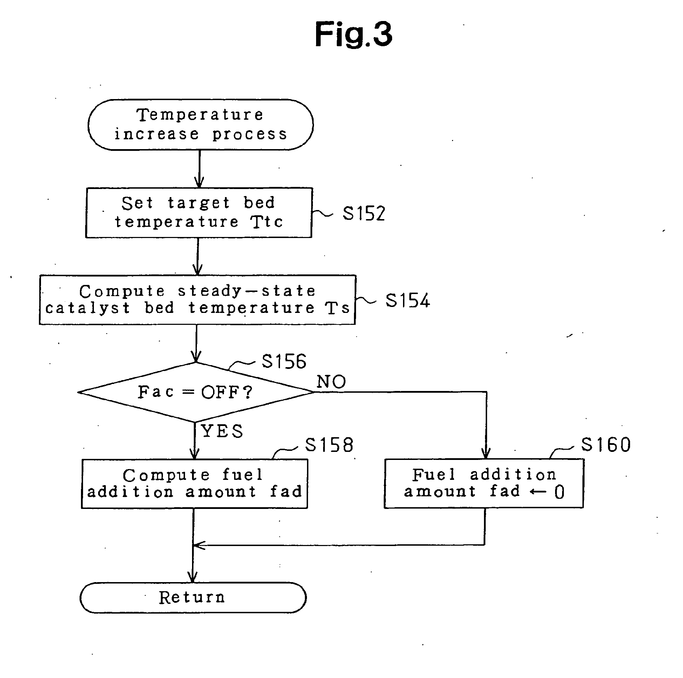

Fig. 3 is a flowchart showing the temperature increase control in which the fuel addition limiting flag Fac, which is set as describe above, is referred to. This process represents a temperature increase control process executed in the PM regeneration control mode and the S poisoning elimination control mode. When the execution of this process is set in the PM regeneration control mode and the S poisoning elimination control mode, the ECU 70 repeatedly executes this process at a predetermined time interval.

When this process is started, the ECU sets a target catalyst bed temperature Ttc (Ttc = 650°C) of the fiter 38a (S152). Then, the steady-state catalyst bed temperature Ts is obtained (S154). The steady-state catalyst bed temperature Ts is the same as the steady-state catalyst bed temperature Ts at step S102 of Fig. 2, and the value of step S102 may be used.

Then, whether the fuel addition limiting flag Fac is OFF is judged (S156). If Fac is OFF (positive outcome at S156), a fuel addition amount **fad** per unit time for maintaining the filter 38a at the target catalyst bed temperature Ttc is computed using an equation 2 (S158).

[Equation 2]

$$fad \leftarrow (Ttc - Ts) \times Ga \times Ck$$

The intake flow rate GA is a flow rate (g/s) detected by the intake flow rate sensor 24. A fuel conversion coefficient Ck is a coefficient for converting the intake flow rate GA into the amount of fuel, and represents the amount of fuel required for increasing the temperature of exhaust gas the flow rate of which is 1g/s by 1°C. Accordingly, the right side of the equation 2 is regarded to compute the amount of fuel per unit time required for increasing the catalyst bed temperature of the filter 38a from the steady-state catalyst bed temperature Ts to the target catalyst bed temperature Ttc in the exhaust gas flow rate that corresponds to the intake flow rate GA. In this manner, current routine is temporarily suspended.

This process is repeatedly executed so that the catalyst bed temperature of the filter 38a is increased to the target catalyst bed temperature Ttc by addition of fuel from the fuel adding valve 68.

If the flag Fac is ON, (negative outcome at S156), the fuel addition amount **fad** is set to 0g. This limits (prohibits, in this embodiment) addition of fuel from the fuel adding valve 68.

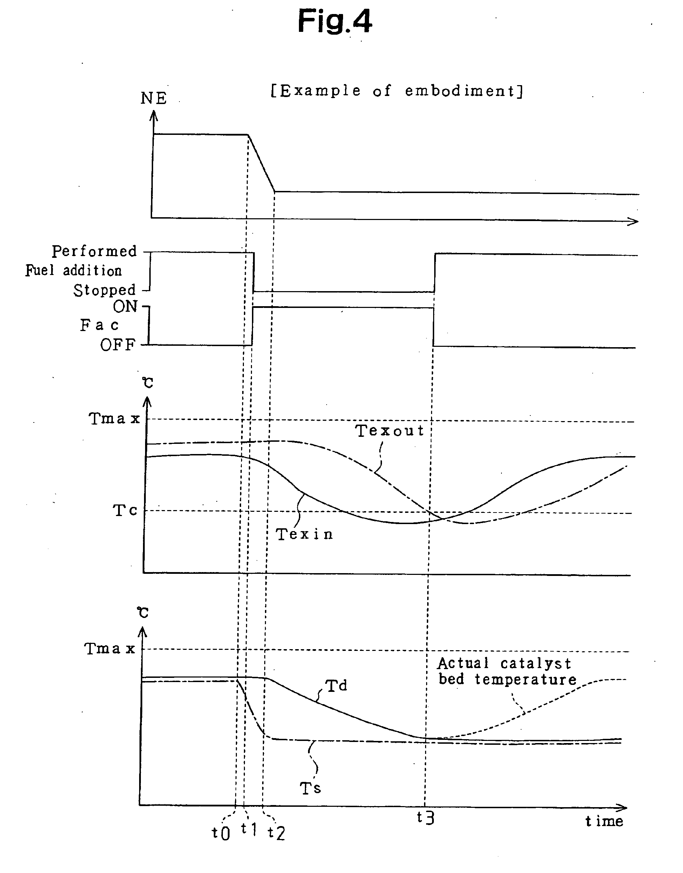

Fig. 4 is a timing chart showing one example of this embodiment. Prior to time t0, the vehicle is driving at a constant high speed. Therefore, the dynamic catalyst bed temperature Td and the steady-state catalyst bed temperature Ts are stable at substantially the same value. When the driver releases the acceleration pedal 72, the load and the engine speed NE are lowered (from time t0), and the engine starts idling (from time t2). Since the steady-state catalyst bed temperature Ts is computed based on the load and the engine speed NE by referring to a map, the steady-state catalyst bed temperature Ts is lowered as the load and the engine speed NE are lowered. However, since the dynamic catalyst bed temperature Td is computed through a calculation in which the thermal capacity Hcex is taken into account, the dynamic catalyst bed temperature Td starts slowly decreasing with a delay after the steady-state catalyst bed temperature Ts starts decreasing.

Therefore, since the inequality (Td - Ts > Tjd) is satisfied (t1), the flag Fac is set to ON, which suspends addition of fuel from the fuel adding valve 68. Accordingly, the actual catalyst bed temperature of the filter 38a is lowered in the same manner as the dynamic catalyst bed temperature Td.

Then, when the exhaust temperatures Texin, Texout detected by the first and second exhaust temperature sensors 44, 46 both fall below the limit removing reference temperature Tc, the flag Fac is set to OFF. This permits addition of fuel to be performed, and addition of fuel is actually performed. Accordingly, as shown by a broken line, the actual catalyst bed temperature of the filter 38a is increased to seek the target catalyst bed temperature. Therefore, the actual catalyst bed temperature is not excessively increased to degrade the catalyst. The NOx occlusion-reduction catalyst 36a is treated substantially in the same manner.

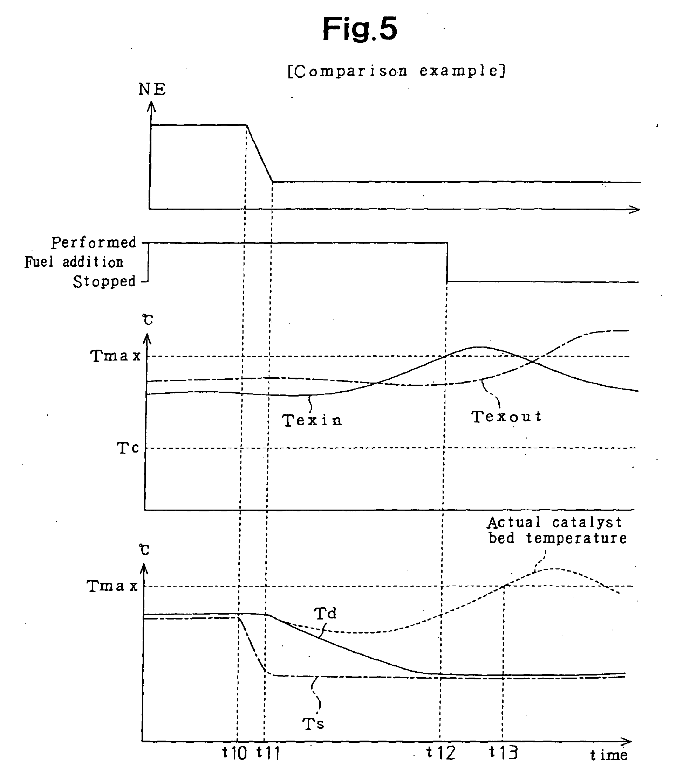

Fig. 5 shows a comparison example in which the fuel addition limiting flag Fac is not set based on the dynamic catalyst bed temperature Td and the steady-state catalyst bed temperature Ts. In this case, immediately after the driver releases the acceleration pedal 72 and the steady-state catalyst bed temperature Ts is lowered (from time t10), addition of fuel is continued according to the steady-state catalyst bed temperature Ts. Therefore, fuel keeps being supplied to the filter 38a, and the amount of added fuel is significantly increased due to the drop of the steady-state catalyst bed temperature Ts. Accordingly, the actual catalyst bed temperature is drastically increased as shown by a broken line and exceeds the upper limit catalyst bed temperature Tmax. This increases the probability of the deterioration of the filter 38a (t13). Incidentally, the exhaust temperature Texin detected by the first exhaust temperature sensor 44 surpasses the upper limit catalyst bed temperature Tmax, addition of fuel is stopped (t12). However, since a considerable amount of fuel has already been added to exhaust gas, an excessive increase of the actual catalyst bed temperature of the filter 38a cannot be avoided. The same is true for the catalyst bed temperature of the NOx occlusion-reduction catalyst 36a.

In the above described configuration, the first exhaust temperature sensor 44 and the second exhaust temperature sensor 46 correspond to exhaust temperature measuring means. Step S104 of the determination process (Fig. 2) for limiting addition of fuel corresponds to a process of dynamic catalyst bed temperature estimating means. Steps S106 to S112 and steps S156, S160 of the temperature increase process (Fig. 3) correspond to the process of fuel addition limiting means.

The first embodiment has the following advantages.

(A) By computing the dynamic catalyst bed temperature Td (S104), the dynamic catalyst bed temperature Td, which corresponds to the actual catalyst bed temperature at the filter 38a while no fuel addition from the fuel adding valve 68 is being performed, is obtained when the diesel engine 2 is in transition. When the steady-state catalyst bed temperature Ts, which determines the amount of fuel added by the fuel adding valve 68, is lower than the dynamic catalyst bed temperature Td, and the difference between the temperatures Ts, Td is more than the limit starting reference temperature difference Tjd, using the steady-state catalyst bed temperature causes fuel addition to be excessive. This can excessively increase the catalyst bed temperature.

In such a case, the fuel addition limiting flag Fac is set to ON, which sets the fuel addition amount **fad** to zero, thereby prohibiting addition of fuel. Accordingly, even if the operating condition of the diesel engine 2 is in transition, the filter 38a is not excessively heated. Likewise, the NOx occlusion-reduction catalyst 36a is not excessively heated.

(B) If the exhaust temperatures Texin, Texout both fall below the limit removing reference temperature Tc, the fuel addition limiting flag Fac is returned to OFF. When the exhaust temperatures Texin, Texout both have been sufficiently decreased, the catalyst bed temperature of the filter 38a and the NOx occlusion-reduction catalyst 36a are assumed to be sufficiently lowered. At this time, removing the limit to addition of fuel does not excessively increase the catalyst bed temperature. Therefore, the temperature increase process is continued to adequately perform the catalyst control.

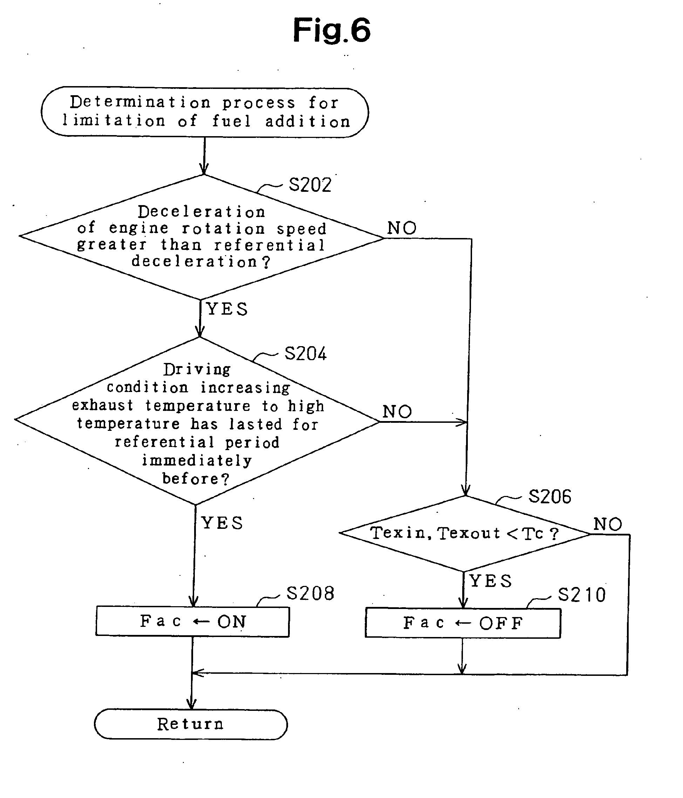

Not part of the invention, a transition state is detected based on the deceleration (corresponds to the degree of decrease) of the engine speed NE to set the fuel addition limiting flag Fac. Therefore, instead of the determination process (Fig. 2) for limiting addition of fuel in the first embodiment, a determination process for limiting addition of fuel shown in Fig. 6 is executed. Other than this, the control processes and the hardware configuration are the same as those of the first embodiment. Therefore, Figs. 1 and 3 are referred to in the description below.

The determination process (Fig. 6) for limiting addition of fuel will be described. This process is executed in an interrupting manner at every predetermined interval. When this process is started, whether the deceleration of the engine speed NE is greater than a reference deceleration (corresponds to a reference decreasing degree) at step S202. The reference deceleration is a reference value to determine that the current state is a transition in which the steady-state catalyst bed temperature Ts is lowered and, as described in the first embodiment, that the current state is a transition that can excessively heat the catalyst bed temperature.

If the deceleration of the engine speed NE is greater than the reference deceleration (positive outcome at S202), whether the immediately preceding operating condition of the diesel engine 2 continued for a reference continuation period in a state that causes the exhaust temperature to be high (S204) is judged. This is because, even if the deceleration of the engine speed NE is greater than the reference deceleration, continuation of addition of fuel will not excessively increase the catalyst bed temperature if the temperature of the exhaust system was not high in the immediately preceding operating condition. In this case, the immediately preceding operating condition represents the steady-state catalyst bed temperature Ts, which is obtained based on the relationship between the engine load and the engine speed NE.

If the immediately preceding operating condition of the engine 2 caused the exhaust temperature to be high and continued for the reference continuation period (positive outcome at S204), it is determined that the engine 2 was decelerated in a state where the exhaust system is heated. In this case, the fuel addition limiting flag Fac is set to ON (S208).

On the other hand, if the deceleration of the engine speed NE is no greater than the reference deceleration (negative outcome at S202), determination of step S206 is executed. Alternatively, if the immediately preceding operating state of the engine 2 did not cause the exhaust temperature to be high and did not last for the reference continuation period (negative outcome at S204), determination of step S206 is executed. The determination (S206) is the same process as that of step S108 in the determination process for limiting addition of fuel according to the first embodiment (Fig 2). That is, whether the exhaust temperatures Texin, Texout are both less than the limit removing reference temperature Tc is judged.

If the exhaust temperatures Texin, Texout are both lower than the limit removing reference temperature Tc (positive outcome at S206), a fuel addition limiting flag Fac is set to OFF (S210). If one of or both of the exhaust temperatures Texin, Texout are equal to or higher than the limit removing reference temperature Tc (negative outcome at S260), the current routine is temporarily suspended.

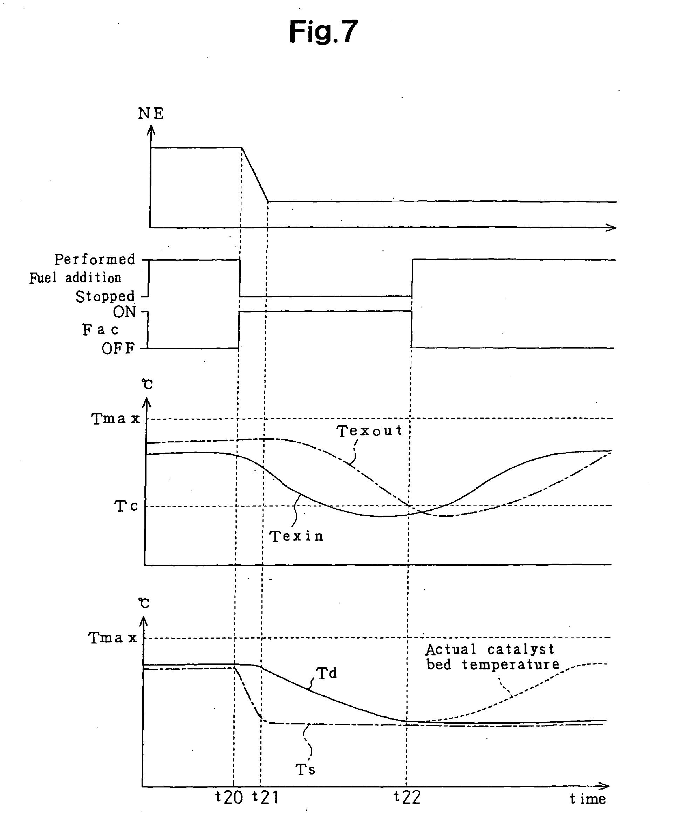

Fig. 7 is a timing chart showing one example. Prior to time t20, the vehicle is driving at a constant high speed. Therefore, the dynamic catalyst bed temperature Td and the steady-state catalyst bed temperature Ts are stable at substantially the same value. When the driver releases the acceleration pedal 72, the load and the engine speed NE are lowered (from time t20), and the engine starts idling (from time t21).

Since an operating state that makes the exhaust temperature high continued for the reference continuation period before the time (t20) at which the engine speed NE started decreasing, the exhaust system is heated at time t20. Since the deceleration of the engine speed NE at time t20 is greater than the reference deceleration, the outcomes of steps S202, S204 are both positive. Accordingly, the fuel addition limiting flag Fac is set to ON (S208). Therefore, addition of fuel from the fuel adding valve 68 is stopped. Accordingly, the actual catalyst bed temperature of the filter 38a is lowered in the same manner as the dynamic catalyst bed temperature Td.

Then, when the exhaust temperatures Texin, Texout detected by the first and second exhaust temperature sensors 44, 46 both fall below the limit removing reference temperature Tc, the flag Fac is set to OFF. This starts addition of fuel. Accordingly, as shown by a broke line, the actual catalyst bed temperature of the filter 38a is increased to seek the target catalyst bed temperature. Therefore, the actual catalyst bed temperature is not excessively heated to degrade the catalyst. The NOx occlusion-reduction catalyst 36a is treated substantially in the same manner.

A comparison example in which addition of fuel is not limited by a process of the determination process (Fig. 6) for limiting addition of fuel is the same as Fig. 5 of the first embodiment.

In the above described configuration, the engine speed sensor 80 corresponds to detecting means for detecting a parameter representing the operating condition of the engine 2. The first exhaust temperature sensor 44 and the second exhaust temperature sensor 46 correspond to exhaust temperature measuring means. The determination process (Fig. 6) for limiting addition of fuel and steps S156, S160 of the temperature increase process (Fig. 3) correspond to the process of fuel addition limiting means. The parameter includes the engine speed, the engine load, the acceleration opening degree, and the speed of the vehicle on which the engine is mounted.

Not part of the invention, this has the following advantages.

(A) When the deceleration of the engine speed NE is greater than the reference deceleration, the diesel engine 2 is estimated to be in transition of the operating condition, in which the steady-state catalyst bed temperature Ts is lowered.

Therefore, if the steady-state catalyst bed temperature Ts is used, an excessive amount of fuel will be added, which excessively promotes oxidation at the filter 38a and the NOx occlusion-reduction catalyst 36a. This can excessively increase the catalyst bed temperature. Therefore, in this case, by limiting (prohibiting, in this embodiment) addition of fuel, the exhaust purifying catalyst is not excessively heated even if the diesel engine 2 is in transition.

Further, addition of fuel is not limited when only the deceleration of the engine speed NE is greater than the reference deceleration, but is limited when the engine speed NE is greater than the reference deceleration and an operating condition of the engine 2 that causes the exhaust temperature to be high has continued for the predetermined period. Accordingly, addition of fuel is limited only when the operating condition of the engine 2 is in transition that excessively heats the exhaust purifying catalyst, which improves the accuracy of the fuel addition limitation.

(B) Not part of the invention, the same advantage (B) as the first embodiment is provided.

[Other Embodiments]

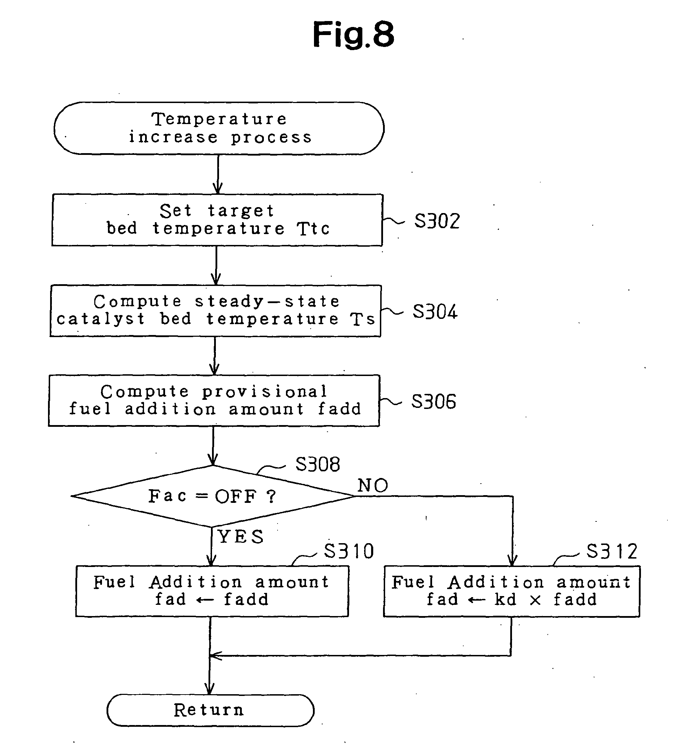

(a) In the first embodiment of the invention, the fuel addition amount **fad** is set to zero when the fuel addition limiting flag Fac is ON in the temperature increase process (Fig. 3), thereby prohibiting addition of fuel. However, for example, as a temperature increase process shown in Fig. 8, the amount of added fuel may be decreased when the flag Fac is ON.

The temperature increase process (Fig. 8) will now be described. This process is executed in the same cycle as that of Fig. 3. When this process is started, a target catalyst bed temperature Ttc is set (S302), and the steady-state catalyst bed temperature Ts is computed (S304). The processes of steps S302, S304 are the same as the processes of steps S152, S154 of Fig. 3.

Then, a provisional fuel addition amount fadd is computed (S306). The provisional fuel addition amount fadd is computed using the equation 2, which is the same equation used for computing the fuel addition amount **fad** at step S158 of Fig. 3.

Then, whether the fuel addition limiting flag Fac is OFF is judged (S308). If the flag Fac is OFF, (positive outcome at S308), the provisional fuel addition amount fadd is substituted for the fuel addition amount **fad** (S310).

If the flag Fac is ON, (negative outcome at S308), the fuel addition amount **fad** is computed as shown in the following equation 3.

$$[\text{Equation 3}]$$

$$\textbf{fad} \leftarrow kd \times fadd$$

In the equation (3), a decrease coefficient kd is less than 1, and may be a fixed value. Alternatively, the decrease coefficient kd may be decreased as the value (Td - Ts) is increased or as the deceleration of the engine speed NE is increased.

(b) At step S202, not part of the invention, the degree of decrease of the engine speed NE is judged. Alternatively, the degree of decrease of the engine load (the fuel injection amount of the fuel injection valve 58 in this embodiment), the acceleration opening degree ACCP, or the vehicle speed may be judged. Further, instead of using one of these parameters, the degree of decrease of two or more of the engine speed NE, the engine load, the acceleration opening degree ACCP, and the vehicle speed may be used in combination. In this case, when the degree of decrease of one or both of the parameters are greater than a reference decrease degree, the outcome of step S202 is positive.

At step S204 not part of the invention, whether the immediately preceding operating condition of the diesel engine 2 made the exhaust temperature high and lasted for the reference continuation period is judged. Other than this, a high temperature state of exhaust gas may be directly detected by judging whether the exhaust temperature Texin detected by the first exhaust temperature sensor 44 has been high for the reference continuation period.

Alternatively, the state where the immediately preceding operating condition of the engine 2 makes the exhaust temperature high refers to a state where the steady-state catalyst bed temperature Ts, which is obtained based on the relationship between the engine load and the engine speed NE, is high. However, instead of the engine.,load, the acceleration opening degree ACCP may be used.

Further, the state may be judged to be present when the following requirements are satisfied. The requirements are (1) the dynamic catalyst bed temperature Td is higher than a reference temperature, (2) the intake air amount GA is greater than a reference air amount, (3) the temperature increase process is being executed, and (4) the exhaust temperatures Texin, Texout are both higher than the reference temperature. If a state where these conditions are present for the reference continuation period, the outcome of step S204 is positive.

Step S204 may be omitted. In this case, if the outcome of step S202 is positive, the flag Fac is set to ON (S208).

(c) In the determination process for limiting addition of fuel according to the first embodiment of the invention, if the inequality (Td - Ts > Tjd) is satisfied (positive outcome at S106), the flag Fac is set to ON (S110). However, instead of the requirement of the inequality (Td - Ts > Tjd), the requirement of step S204 of the determination process (Fig. 6) for limiting addition of fuel according to the second embodiment may be added. That is, it may be configured that the flag Fac is set to ON (S110) when two requirements are satisfied, which are that the inequality (Td - Ts > Tjd) is satisfied and that the immediately preceding engine operating condition caused the exhaust temperature to be high and continued for the reference continuation period.

(d) In the determination process for limiting addition of fuel in the first embodiment (Figs. 2), the fuel addition limiting flag Fac is returned to OFF from ON when the exhaust temperatures Texin, Texout are both lower than the limit removing reference temperature Tc. Instead, the flag Fac may be returned to OFF when a certain period has elapsed. That is, after the flag Fac is set to ON, the elapsed time may be measured, and when a predetermined reference limiting period has elapsed, the flag Fac may be returned to OFF.

The reference limiting period may be set longer for a higher value of the steady-state catalyst temperature Ts, the dynamic catalyst bed temperature Td, or the engine speed NE at the time when the flag Fac is set to ON from OFF.

(e) In step S108, of the determination process for limiting addition of fuel in the first embodiment, the requirements are satisfied when the exhaust temperatures Texin, Texout are both lower than the limit removing reference temperature Tc. Instead of this, it may be configured that the requirements are satisfied when any one of the exhaust temperatures Texin, Texout is lower than the limit removing reference temperature Tc.

Alternatively, instead of using the exhaust temperatures Texin, Texout, the fuel addition limiting flag Fac may be returned to OFF when the dynamic catalyst bed temperature Td is judged to be low.

**Claims**

1.  A catalyst control apparatus of an internal combustion engine (2), wherein the apparatus estimates a steady-state catalyst bed temperature of an exhaust purifying catalyst (38) based on an operating condition of the internal combustion on the assumption that addition of fuel is not being performed, and wherein the apparatus compares the steady-state catalyst bed temperature and a target bed temperature and, based on comparison between the steady-state catalyst bed temperature and the target bed temperature, causes a fuel adding valve (68) located in a section upstream of the exhaust purifying catalyst (38) to add fuel to exhaust, thereby oxidizing the fuel at the exhaust purifying catalyst (38) to increase the catalyst bed temperature to the target bed temperature, the apparatus comprising:

    estimating means, wherein, on the assumption that addition of fuel from the fuel adding valve is not being performed, the estimating means estimates a dynamic catalyst bed temperature of the exhaust purifying catalyst based on a history of the operating condition of the internal combustion engine and a thermal capacity of an exhaust system; and
    limiting means that limits addition of fuel; **characterized in that**
    the limiting means limits addition of fuel when the steady-state catalyst bed temperature is lower than the dynamic catalyst bed temperature estimated by the estimating means, and the difference between the steady-state catalyst bed temperature and the dynamic catalyst bed temperature is greater than a reference temperature difference.

2.  The catalyst control apparatus of an internal combustion engine according to claim 1, **characterized by** measuring means for measuring an exhaust temperature,
    wherein the limiting means removes the limit to addition of fuel when the exhaust temperature measured by the measuring means decreases to a limit removing reference temperature.

3.  The catalyst control apparatus of an internal combustion engine according to claim 1, **characterized in that** the limiting means removes the limit to addition of fuel when the dynamic catalyst bed temperature of the exhaust purifying catalyst, which temperature is estimated based on a history of the operating condition of the internal combustion engine and the thermal capacity of the exhaust system on the assumption that addition of fuel from the fuel adding valve is not being performed, decreases to a limit removing reference temperature.

4.  The catalyst control apparatus of an internal combustion engine according to claim 1, **characterized in that** the limiting means removes the limit to addition of fuel when the limit to addition of fuel has continued for a predetermined reference limiting period.

5. The catalyst control apparatus of an internal combustion engine according to any one of claims 1 to 4, **characterized in that** the limiting means limits addition of fuel by prohibiting addition of fuel from the fuel adding valve.

6. The catalyst control apparatus of an internal combustion engine according to any one of claims 1 to 4, **characterized in that** the limiting means limits addition of fuel by decreasing the amount of addition of fuel from the fuel adding valve.

7. The catalyst control apparatus of an internal combustion engine according to any one of claims 1 to 6, **characterized in that** the exhaust purifying catalyst is a NOx occlusion-reduction catalyst, wherein the temperature increase to the target bed temperature is a process performed when sulfur is emitted from the NOx occlusion-reduction catalyst poisoned with sulfur.

8. The catalyst control apparatus of an internal combustion engine according to any one of claims 1 to 6, **characterized in that** the exhaust purifying catalyst includes a filter for filtering particulate matter in exhaust and a layer of a NOx occlusion-reduction catalyst formed on the filter, wherein the temperature increase to the target bed temperature is a process performed when the particulate matter is removed from the filter through oxidation.

9. The catalyst control apparatus of an internal combustion engine according to any one of claims 1 to 8, **characterized in that** the internal combustion engine is a diesel engine.

**Patentansprüche**

1. Katalysatorsteuervorrichtung für einen Verbrennungsmotor (2), wobei die Vorrichtung eine Gleichgewichtszustands-Katalysatorbetttemperatur eines Abgasreinigungskatalysators (38) auf Basis einer Betriebsbedingung der Verbrennung unter der Annahme, dass keine Kraftstoffzugabe durchgeführt wird, bestimmt, und wobei die Vorrichtung die Gleichgewichtszustands-Katalysatorbetttemperatur und eine Bett-Solltemperatur vergleicht, und auf Basis des Vergleichs zwischen der Gleichgewichtszustands-Katalysatorbetttemperatur und der Bett-Solltemperatur bewirkt, dass ein Kraftstoffzugabeventil (68), das sich in einem Abschnitt stromaufwärts vom Abgasreinigungskatalysator (38) befindet, einem Abgas Kraftstoff zusetzt, wodurch der Kraftstoff am Abgasreinigungskatalysator (38) oxidiert wird, um die Katalysatorbetttemperatur auf die Bett-Solltemperatur zu erhöhen, wobei die Vorrichtung aufweist:

    eine Bestimmungseinrichtung, wobei die Bestimmungseinrichtung unter der Annahme, dass keine Kraftstoffzugabe vom Kraftstoff-Zugabeventil durchgeführt wird, eine dynamische Katalysatorbetttemperatur des Abgasreinigungskatalysators auf Basis eines Verlaufs der Betriebsbedingung des Verbrennungsmotors und einer Wärmekapazität eines Abgassystems bestimmt; und
    eine Begrenzungseinrichtung, die eine Kraftstoffzugabe begrenzt; **dadurch gekennzeichnet, dass**
    die Begrenzungseinrichtung eine Kraftstoffzugabe begrenzt, wenn die Gleichgewichtszustands-Katalysatorbetttemperatur niedriger ist als die dynamische Katalysatorbetttemperatur, die vom Bestimmungsmittel bestimmt wird, und der Unterschied zwischen der Gleichgewichtszustands-Katalysatorbetttemperatur und der dynamischen Katalysatorbetttemperatur größer ist als ein Bezugs-Temperaturunterschied.

2. Katalysatorsteuervorrichtung für einen Verbrennungsmotor nach Anspruch 1, **gekennzeichnet durch** eine Messeinrichtung zum Messen einer Abgastemperatur,
    wobei die Begrenzungseinrichtung die Begrenzung für die Kraftstoffzugabe aufhebt, wenn die Abgastemperatur, die von der Messeinrichtung gemessen wird, auf eine Begrenzungsaufhebungs-Bezugstemperatur sinkt.

3. Katalysatorsteuervorrichtung für einen Verbrennungsmotor nach Anspruch 1, **dadurch gekennzeichnet, dass** die Begrenzungseinrichtung die Begrenzung für die Kraftstoffzugabe aufhebt, wenn die dynamische Katalysatorbetttemperatur des Abgasreinigungskatalysators, die eine Temperatur ist, die auf Basis eines Verlaufs der Betriebsbedingung des Verbrennungsmotors und der Wärmekapazität des Abgassystems unter der Annahme bestimmt wird, dass keine Kraftstoffzugabe vom Kraftstoffzugabeventil durchgeführt wird, auf eine Begrenzungsaufhebungs-Bezugstemperatur sinkt.

4. Katalysatorsteuervorrichtung für einen Verbrennungsmotor nach Anspruch 1, **dadurch gekennzeichnet, dass** die Begrenzungseinrichtung die Begrenzung für die Kraftstoffzugabe aufhebt, wenn die Begrenzung für die Kraftstoffzugabe über einen vorgegebenen Bezugs-Begrenzungszeitraum fortbestanden hat.

5. Katalysatorsteuervorrichtung für einen Verbrennungsmotor nach einem der Ansprüche 1 bis 4, **dadurch gekennzeichnet, dass** die Begrenzungseinrichtung die Kraftstoffzugabe **dadurch** begrenzt, dass sie die Kraftstoffzugabe vom Kraftstoffzugabeventil verhindert.

6. Katalysatorsteuervorrichtung für einen Verbrennungsmotor nach einem der Ansprüche 1 bis 4, **dadurch gekennzeichnet, dass** die Begrenzungseinrichtung die Kraftstoffzugabe **dadurch** begrenzt, dass sie die Kraftstoffmenge, die vom Kraftstoffzugabeventil zugegeben wird, verringert.

7. Katalysatorsteuervorrichtung für einen Verbrennungsmotor nach einem der Ansprüche 1 bis 6, **dadurch gekennzeichnet, dass** der Abgasreinigungskatalysator ein NOx-Okklusions-Reduktions-Katalysator ist, wobei die Erhöhung der Temperatur auf die Bett-Solltemperatur ein Verfahren ist, das durchgeführt wird, wenn Schwefel vom NOx-Okklusions-Reduktions-Katalysator emittiert wird, der mit Schwefel vergiftet worden ist.

8. Katalysatorsteuervorrichtung für einen Verbrennungsmotor nach einem der Ansprüche 1 bis 6, **dadurch gekennzeichnet, dass** der Abgasreinigungskatalysator einen Filter zum Filtern von teilchenförmigem Material im Abgas und eine auf dem Filter ausgebildete Schicht aus einem NOx-Okklusions-Reduktions-Katalysator aufweist, wobei die Erhöhung der Temperatur auf die Bett-Solltemperatur ein Verfahren ist, das durchgeführt wird, wenn das teilchenförmige Material durch Oxidation vom Filter entfernt wird.

9. Katalysatorsteuervorrichtung für einen Verbrennungsmotor nach einem der Ansprüche 1 bis 8, **dadurch gekennzeichnet, dass** der Verbrennungsmotor ein Dieselmotor ist.


**Revendications**

1. Appareil de commande de catalyseur d'un moteur à combustion interne (2), dans lequel l'appareil estime une température de lit de catalyseur stabilisée d'un catalyseur de purification d'échappement (38) sur la base d'une condition de fonctionnement du moteur à combustion interne avec la supposition que l'ajout de carburant n'est pas réalisé, et dans lequel l'appareil compare la température de lit de catalyseur stabilisée et une température de lit visée et, sur la base d'une comparaison entre la température de lit de catalyseur stabilisée et la température de lit visée, amène une soupape d'ajout de carburant (68) située dans une section en amont du catalyseur de purification d'échappement (38) à ajouter du carburant à l'échappement, en oxydant ainsi le carburant au niveau du catalyseur de purification d'échappement (38) afin d'augmenter la température de lit de catalyseur à la température de lit visée, l'appareil comportant :

   des moyens d'estimation, dans lesquels, avec la supposition que l'ajout du carburant de la soupape d'ajout de carburant n'est pas réalisé, les moyens d'estimation estiment une température dynamique de lit de catalyseur du catalyseur de purification d'échappement sur la base d'un historique de la condition de fonctionnement du moteur à combustion interne et d'une capacité thermique d'un dispositif d'échappement ; et
   des moyens de limitation qui limitent l'ajout de carburant ; **caractérisé en ce que**
   les moyens de limitation limitent l'ajout de carburant quand la température de lit de catalyseur stabilisée est inférieure à la température dynamique de lit de catalyseur estimée par les moyens d'estimation, et la différence entre la température de lit de catalyseur stabilisée et la température dynamique de lit de catalyseur est supérieure à une différence de température de référence.

2. Appareil de commande de catalyseur d'un moteur à combustion interne selon la revendication 1, **caractérisé par** des moyens de mesure destinés à mesurer une température d'échappement,
   les moyens de limitation supprimant la limite d'ajout de carburant quand la température d'échappement mesurée par les moyens de mesure diminue jusqu'à une température de référence de suppression de limite.

3. Appareil de commande de catalyseur d'un moteur à combustion interne selon la revendication 1, **caractérisé en ce que** les moyens de limitation suppriment la limite d'ajout de carburant quand la température dynamique de lit de catalyseur du catalyseur de purification d'échappement, laquelle température est estimée sur la base d'un historique de la condition de fonctionnement du moteur à combustion interne et de la capacité thermique du dispositif d'échappement avec la supposition que l'ajout de carburant de la soupape d'ajout de carburant n'est pas réalisé, diminue jusqu'à une température de référence de suppression de limite.

4. Appareil de commande de catalyseur d'un moteur à combustion interne selon la revendication 1, **caractérisé en**

**ce que** les moyens de limitation suppriment la limite d'ajout de carburant quand la limite d'ajout de carburant s'est poursuivie pendant pour une période de limitation de référence prédéterminée.

5. Appareil de commande de catalyseur d'un moteur à combustion interne selon l'une quelconque des revendications 1 à 4, **caractérisé en ce que** les moyens de limitation limitent l'ajout de carburant en interdisant l'ajout de carburant par la soupape d'ajout de carburant.

6. Appareil de commande de catalyseur d'un moteur à combustion interne selon l'une quelconque des revendications 1 à 4, **caractérisé en ce que** les moyens de limitation limitent l'ajout de carburant en diminuant la quantité d'ajout de carburant par la soupape d'ajout de carburant.

7. Appareil de commande de catalyseur d'un moteur à combustion interne selon l'une quelconque des revendications 1 à 6, **caractérisé en ce que** le catalyseur de purification d'échappement est un catalyseur d'occlusion-réduction de $NO_x$, l'augmentation de température jusqu'à la température de lit visée étant un processus réalisé quand du soufre est émis par le catalyseur d'occlusion-réduction de $NO_x$ empoisonné avec du soufre.

8. Appareil de commande de catalyseur d'un moteur à combustion interne selon l'une quelconque des revendications 1 à 6, **caractérisé en ce que** le catalyseur de purification d'échappement comprend un filtre destiné à filtrer une matière en particules dans l'échappement et une couche d'un catalyseur d'occlusion-réduction de $NO_x$ formée sur le filtre, l'augmentation de température jusqu'à la température de lit visée étant un processus réalisé quand la matière en particules est éliminée du filtre par oxydation.

9. Appareil de commande de catalyseur d'un moteur à combustion interne selon l'une quelconque des revendications 1 à 8, **caractérisé en ce que** le moteur à combustion interne est un moteur diesel.

# Fig.1

# Fig.2

Determination process for
limitation of fuel addition

Compute steady-state
catalyst bed temperature Ts — S102

Compute dynamic catalyst
bed temperature Td — S104

S106

Td $-$ Ts $>$ Tjd ? — NO

YES

S108

Texin, Texout $<$ Tc ? — NO

YES

Fac $\leftarrow$ ON — S110    Fac $\leftarrow$ OFF — S112

Return

# Fig.3

```
    ┌─────────────────────────┐
    │      Temperature         │
    │   increase process       │
    └─────────────────────────┘
                │
                ▼
    ┌─────────────────────────┐
    │    Set target bed        │ ～ S152
    │   temperature Ttc        │
    └─────────────────────────┘
                │
                ▼
    ┌─────────────────────────┐
    │  Compute steady-state    │ ～ S154
    │ catalyst bed temperature Ts│
    └─────────────────────────┘
                │
                ▼  ～ S156
            ◇─────────◇        NO
           Fac = OFF?  ─────────────────────┐
            ◇─────────◇                      │
                │ YES                        │
                │    ～ S158                 │  ～ S160
    ┌─────────────────────┐      ┌─────────────────────┐
    │   Compute fuel       │      │   Fuel addition      │
    │ addition amount fad  │      │  amount fad ← 0      │
    └─────────────────────┘      └─────────────────────┘
                │                           │
                ◄───────────────────────────┘
                │
                ▼
    ┌─────────────────────┐
    │      Return          │
    └─────────────────────┘
```

# Fig.4

[Example of embodiment]

EP 1 515 017 B1

# Fig.5

[Comparison example]

19

EP 1 515 017 B1

# Fig.6

Determination process for
limitation of fuel addition

S202

Deceleration
of engine rotation speed
greater than referential
deceleration?  NO

YES

S204

Driving
condition increasing
exhaust temperature to high
temperature has lasted for
referential period
immediately
before?  NO

YES

S206

Texin, Texout < Tc ?  NO

YES

S208                    S210

Fac ← ON          Fac ← OFF

Return

20

# Fig.7

# Fig.8

```
        ┌─────────────────────────┐
        │      Temperature        │
        │    increase process     │
        └─────────────────────────┘
                     │
                     ▼
        ┌─────────────────────────┐
        │       Set target        │  ～ S302
        │    bed temperature Ttc   │
        └─────────────────────────┘
                     │
                     ▼
        ┌─────────────────────────┐
        │    Compute steady-state │  ～ S304
        │  catalyst bed temperature Ts │
        └─────────────────────────┘
                     │
                     ▼
        ┌─────────────────────────┐
        │    Compute provisional  │  ～ S306
        │  fuel addition amount fadd │
        └─────────────────────────┘
                     │
                     ▼        ～ S308
                  ╱─────────╲
                 ╱           ╲      NO
                ╱  Fac = OFF ? ╲───────────────┐
                ╲             ╱                │
                 ╲           ╱                 │
                  ╲─────────╱                  │
                     │ YES                     │
                     │    ～ S310              │   ～ S312
        ┌─────────────────────────┐  ┌─────────────────────────┐
        │   Fuel Addition amount  │  │   Fuel Addition amount  │
        │      fad ← fadd         │  │    fad ← kd × fadd       │
        └─────────────────────────┘  └─────────────────────────┘
                     │                          │
                     │◄─────────────────────────┘
                     ▼
        ┌─────────────────────────┐
        │         Return          │
        └─────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002122019 A